(19) Europäisches Patentamt
European Patent Office
Office européen des brevets

(11) Veröffentlichungsnummer: **0 161 694**
**A1**

# (12) EUROPÄISCHE PATENTANMELDUNG

(21) Anmeldenummer: **85200420.9**

(22) Anmeldetag: **19.03.85**

(51) Int. Cl.⁴: **B 41 J 13/02**, B 65 H 5/06, F 16 D 1/06

(30) Priorität: **23.03.84 CH 1469/84**

(43) Veröffentlichungstag der Anmeldung: **21.11.85 Patentblatt 85/47**

(84) Benannte Vertragsstaaten: **AT CH DE FR GB IT LI NL SE**

(71) Anmelder: **Hasler AG, Belpstrasse 23, CH-3000 Bern 14 (CH)**

(72) Erfinder: **Inäbnit, Edward, Leiserenweg 6, CH-3122 Kehrsatz (CH)**

(74) Vertreter: **Schwerdtel, Eberhard, Dr., c/o Hasler AG Belpstrasse 23, CH-3000 Bern 14 (CH)**

## (54) Verfahren zur Herstellung einer Transportwalze.

(57) Zur Herstellung einer Papiertransportwalze wird die Achse (11) in der benötigten Länge von Stangenmaterial abgeschnitten und mit Querborhungen (21) versehen. Im Spritzgussverfahren werden aus zwei Kunststoffen Rollen (13) so gespritzt, dass sich konzentrisch über einem härteren Bereich (12) ein weicherer Bereich (18) ergibt. Im härteren Bereich (12) ist ein seitlich offener Nutschlitz (17) eingeformt. Zur Montage werden die Rollen (13) auf die Achse (11) aufgeschoben, in die Querbohrungen (21) Stifte (19) lose eingesteckt und schliesslich die Rollen (13) unter Druck mit dem Nutschlitz (17) auf die Stifte (19) so aufgeschnappt, dass sich die Stifte (19) und die Rollen (13) gegenseitig fixieren.

Schnitt A-A

17
26
11
21
19
14
13
25

EP 0 161 694 A1

Verfahren zur Herstellung einer Transportwalze

Die Erfindung betrifft ein Verfahren zur Herstellung einer Transportwalze entsprechend dem Oberbegriff von Anspruch 1. Die Transportwalze ist insbesondere zum Transport von Papier in Büromaschinen vorgesehen.

Papiertransportwalzen für Büromaschinen sind bekannt. Sie sind entweder vollzylindrisch oder bestehen aus einer metallischen Achse, auf die eine oder mehrere zylindrische Rollen aufgesteckt sind.

Für drehbar auf die Achse aufgesteckte Rollen für Papiertransportzwecke ist es bekannt, diese durch in Nuten befestigte Federringe gegen seitliches Verrutschen zu sichern. Sind die Rollen dagegen winkelstarr mit der Achse verbunden, so können die Rollen entweder aufgepresst, mittels eines Splintes oder Stiftes befestigt oder entsprechend Schrift EP 62 140 aus Kunststoff direkt auf die Metallachse aufgespritzt sein.

Aus der Schrift US 3 733 094 ist es für Kreissägeblätter bekannt, diese unter Verwendung eines lose in eine durchgehende Bohrung einer Achse eingesteckten Stiftes auf dieser Achse drehfest zu befestigen. Hierbei wird beim Verspannen der Stift seitlich in eine Nut gepresst, die ihn und das Kreissägeblatt unverlierbar hält.

Die Aufgabe der Erfindung besteht nun darin, für die Zwecke von Büromaschinen ein besonders einfaches und damit billiges Herstellungsverfahren für Papiertransportwalzen anzugeben, bei denen eine Metallachse winkelstarr Kunststoffrollen trägt. Diese Aufgabe wird durch den kennzeichnenden Teil von Anspruch 1 gelöst. Die abhängigen Ansprüche geben Ausgestaltungen der Erfindung wieder.

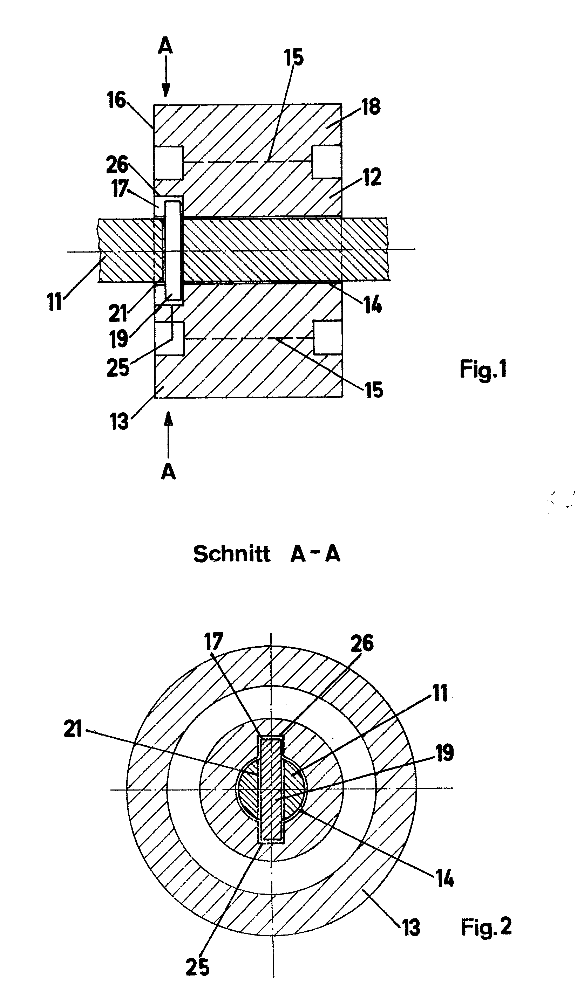

Im folgenden wird die Erfindung anhand von zwei Figuren beispielsweise näher erläutert. Die Figuren zeigen eine Transportwalze, und zwar
Fig. 1 radial geschnitten und
Fig. 2 quer geschnitten.

Die Transportwalze umfasst eine Metallachse 11, auf die eine oder mehrere Rollen 13 mit zentrischer Bohrung 14 aufgesteckt sind. Die Rollen 13 werden aus zwei thermoplastischen Kunststoffen im Spritzgussverfahren hergestellt. Aus den härteren der beiden Kunststoffe, z.B. Polyamid, wird zuerst der innere Teil 12 der Rolle 13 gespritzt. Anschliessend wird dieser innere Teil 12 mit einem weicheren Kunststoff mit guten Haftreibungseigenschaften, z.B. Polyurethan, konzentrisch überspritzt und somit der äussere Teil 18 der Rolle 13 gebildet. Die Grenze 15 zwischen den beiden Kunststoffen ist auf Grund dieser Herstellung verfliessend und daher nur gestrichelt angedeutet. Zur Herstellung des exakten Aussendurchmessers und zur konzentrischen Ausrichtung zur Bohrung 14 werden die Rollen 13 nach dem Erhärten an ihren späteren Laufflächen bevorzugt noch überschliffen.

An einer ihrer beiden Stirnseiten (16) weist jede Rolle 13 im inneren Teil 12 einen Nutschlitz 17 auf. Dieser ist geradlinig, quer zur Achsrichtung angeordnet, nach aussen offen, in seiner Längsrichtung auf beiden Seiten begrenzt und erweitert sich nach innen konkav. Aufgrund des Kunststoffmaterials sind seine lippenförmigen Aussenkanten teilelastisch. Die verbleibende seitliche Öffnung des Nutschlitzes 17 ist kleiner als der Längsschnitt des im Inneren des Nutschlitzes 17 gefangenen Metallstiftes 19. Dieser Stift 19 ist lose in eine Querbohrung 21 der Achse 11 eingesteckt und wird im Nutschlitz durch die Endbegrenzungen 25, 26, durch das Wandmaterial und durch die lippenförmigen Aussenkanten des Nutschlitzes 17 unverlierbar gehalten. Durch seitlichen Druck, d.h. Druck in Achsrichtung, und aufgrund des teilelastischen Verhaltens des inneren Kunststoffes lasst sich die Rolle 13 leicht auf den Stift 19 aufschnappen bzw. auch wieder von diesem abnehmen.

Der Stift 19, dessen Länge grösser als der Durchmesser der Achse 11 bzw. länger als die Querbohrungen 21 ist, wird im Nutschlitz 17 der Rolle 13 wiederum wird durch den Stift 19 positionsgerecht gehalten und ist gesichert gegen seitliches Verrutschen und gegen Verdrehung. Der Stift 19 und die Rolle 13 sind somit aufeinander abgestimmt und halten sich gegenseitig. Wichtig ist hierbei noch, dass der Nutschlitz 17 und der Stift 19 so ausgebildet sind, dass sich beim Auftreten von Drehmomenten zwischen der Achse 11 und der Rolle 13 keine Kraftkomponente axial in Richtung zur Schlitzöffnung bildet.

Die Öffnung des Nutschlitzes 17 kann wie beschrieben durch lippenförmige Aussenkanten begrenzt sein. In anderer Ausführung kann am Nutschlitz 17 wenigstens ein freier, hakenförmiger Stift so angeordnet sein, dass er mit seinem Haken seitlich in den Nutschlitz ragt und beim Einschnappen des Stiftes 19 durch diesen elastisch vorübergehend zur Seite gedrückt wird.

Die Herstellung der beschriebenen Transportwalze kann sehr kostengünstig erfolgen. Die Achse 11 wird aus Stangenmaterial des gewünschten Durchmessers in der benötigten Länge abgeschnitten. Darauf folgt das Bohren der Querbohrungen 21, das Aufstecken der Rollen 13 auf die Achse 11, das Einstecken der Stifte 19 in die Bohrungen 21 und das Aufschnappen der Rollen 13 auf die Stifte 19.

Die Rollen 13 werden, wie bereits beschrieben, im Spritzgussverfahren aus zwei Kunststoffen hergestellt, wobei die Wahl des oder der Kunststoffe weitgehend frei ist. Aus Gründen der Spritzgusstechnik und der Materialersparnis ist es hierbei vorteilhaft, die Rollen beispielsweise mit seitlich offenen Hohlräumen oder Kammern auszustatten.

Das beschriebene Herstellungsverfahren für Papiertransportwalzen ist einfach und damit preisgünstig. Ein weiterer Vorteil besteht darin, dass die Walzen aufgrund ihres Aufbaus flexibel sind bezüglich der Achsenlänge, sowie der Anzahl und Lage der Rollen 13. Die Masshaltigkeit der Walzen ist durch das genannte Überschleifen der Rollenoberfläche einfach zu gewährleisten, wobei eine exakt zylindrische Oberfläche oder zur Verbesserung der Papierlaufeigenschaft eine leicht bombierte Oberfläche gewinnbar ist.

Patentansprüche

Hasler AG Fall 639

1. Verfahren zur Herstellung einer Transportwalze, insbesondere für Papier in Büromaschinen, umfassend eine tragende Achse (11) mit wenigstens einer Querbohrung (21), wenigstens einem Stift (19) und wenigstens einer Rolle (13) aus Kunststoff mit einem Nutschlitz (17), wobei die Stifte in der Querbohrung (21) und im Nutschlitz (17) liegen und auf diese Weise die Rollen (13) winkelstarr auf der Achse (11) halten,
dadurch gekennzeichnet,
- dass die Rollen (13) im Spritzgussverfahren aus zwei verschieden harten, thermoplastischen Kunststoffen gespritzt werden, derart, dass der weichere Kunststoff den härteren konzentrisch umgibt,
- dass der Nutschlitz (17) beim Spritzen in den härteren Kunststoff so eingeformt wird, dass seine seitliche Öffnung kleiner als der Längsschnitt der Stifte (19) und elastisch verformbar ist, und
- dass die Rollen (13) auf die Achse (11) aufgeschoben, die Stifte (19) lose in die Querbohrungen (21) eingesteckt und die Rollen (13) unter axialer Druckausübung mit ihrem Nutschlitz (17) auf die Stifte (19) aufgeschnappt werden.

2. Verfahren nach Anspruch 1,
dadurch gekennzeichnet,
dass die Rollen (13) nach dem Erhärten der Kunststoffe zur Verbesserung der Masshaltigkeit überschliffen werden.

3. Verfahren nach Anspruch 2,
dadurch gekennzeichnet,
dass die Rollen (13) auf konzentrische, zylindrische Form geschliffen werden.

4. Verfahren nach Anspruch 2,
dadurch gekennzeichnet,
dass die Rollen (13) auf konzentrische, bombierte Form geschliffen werden.

Fall 639

A
15
16
18
26
17
12
11
21
19
25
14
15
13
A

Fig.1

Schnitt A-A

17
26
11
21
19
14
13
25

Fig.2

0161694

Europäisches Patentamt

# EUROPÄISCHER RECHERCHENBERICHT

Nummer der Anmeldung

EP 85 20 0420

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| Y,D | EP-A-0 062 140 (WILDEN KG.) * Seite 8, Zeilen 10-31; Seite 10, Zeilen 20-30; Figuren 1-4 * | 1 | B 41 J 13/02<br>B 65 H 5/06<br>F 16 D 1/06 |
| A | | 3 | |
| | --- | | |
| Y | DE-A-1 804 582 (SCHMAHL) * Seite 5, Zeile 24 - Seite 6, Zeile 3; Figuren 1-11 * | 1 | |
| | --- | | |
| A | DE-C- 721 383 (MERCEDES BÜROMASCHINEN) * Seite 2, Zeilen 35-39; Figur 1 * | 2,3 | |
| | --- | | RECHERCHIERTE SACHGEBIETE (Int. Cl.4) |
| A | PATENTS ABSTRACTS OF JAPAN, Band 8, Nr. 22 (M-272)(1459), 31. Januar 1984, Seite 109 M 272; & JP - A - 58 181 668 (CANON K.K.) 24.10.1983 * Insgesamt * | 4 | B 41 J<br>B 65 H<br>F 16 D<br>F 16 C<br>H 01 H |
| | --- | | |
| A,D | US-A-3 733 094 (EMTER) * Zusammenfassung; Figuren 2-4 * | 1 | |
| | --- | | |
| A | US-A-3 549 182 (BOGUE et al.) | | |
| | --- | | |
| A | US-A-2 171 361 (GITS et al.) | | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 05-07-1985 | LOUVION B.A.G.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

0161694

Europäisches Patentamt

# EUROPÄISCHER RECHERCHENBERICHT

Nummer der Anmeldung

EP 85 20 0420

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 291 253 (OSBORN)<br>----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 05-07-1985 | LOUVION B.A.G.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82